# EUROPÄISCHE PATENTSCHRIFT

(11) **EP 2 649 332 B1**
(45) Veröffentlichungstag und Bekanntmachung des Hinweises auf die Patenterteilung: **20.07.2016**
(21) Anmeldenummer: 11788459.3
(22) Anmeldetag: 28.11.2011
(51) Int. Cl.: F16C 19/36, F16C 33/58, F16C 33/64, F16C 19/22

(54) **GEOMETRIEKONZEPT FÜR EINEN ROLLE-BORD-KONTAKT BEI ROLLENLAGERN**
GEOMETRIC CONCEPT FOR A ROLLER-RIB CONTACT FOR ROLLING BEARINGS
CONCEPT GÉOMÉTRIQUE PERMETTANT UN CONTACT PAR BORD DE ROULEAU POUR DES ROULEMENTS À ROULEAUX

(30) Priorität: 06.12.2010 DE 102010062481
(43) Veröffentlichungstag der Anmeldung: 16.10.2013
(73) Patentinhaber: Aktiebolaget SKF, 415 50 Göteborg (SE)
(72) Erfinder: LIANG, Baozhu, 97456 Hambach (DE); REUGELS, Michael, 97478 Knetzgau (DE)
(74) Vertreter: Schonecke, Mitja
(86) Internationale Anmeldenummer: PCT/EP2011/071157
(87) Internationale Veröffentlichungsnummer: WO 2012/076353

(56) Entgegenhaltungen:
- CH-A- 212 693
- DE-A1-102008 020 068
- JP-U- H0 490 721
- US-A1- 2007 041 678

## Beschreibung

Die vorliegende Erfindung betrifft ein Geometriekonzept für einen Rolle-Bord-Kontakt bei Rollenlagern, insbesondere für einen Kegelrollen-Bord-Kontakt bei Kegelrollenlagern.

Führungsborde bei Rollenlagern, wie z. B. Kegelrollenlagern, können entweder gerade oder sphärisch ausgeführt werden. Gerade Borde werden hauptsächlich für Rollenlager kleinerer Durchmesser und somit auch kleinerer Bordbreiten eingesetzt. Hierbei ist eine Bordbreite oft zu gering, um ein definiertes Profil auf einer zur Verfügung stehenden Bordfläche herzustellen. Sphärische Borde finden ihre Anwendung größtenteils bei Rollenlagern mit größeren Durchmessern und somit auch mit größeren Bordbreiten. Ein sphärischer Bord ist dadurch gekennzeichnet, dass ein Radius, der eine einer Rollenlaufbahn zugewandte Bordform beschreibt, seinen Ursprung im Wesentlichen auf einer Rotationsachse der Rollen (Rollenrotationsachse) hat, wobei geringe Abweichungen aufgrund von Fluchtungsfehlern erlaubt sind.

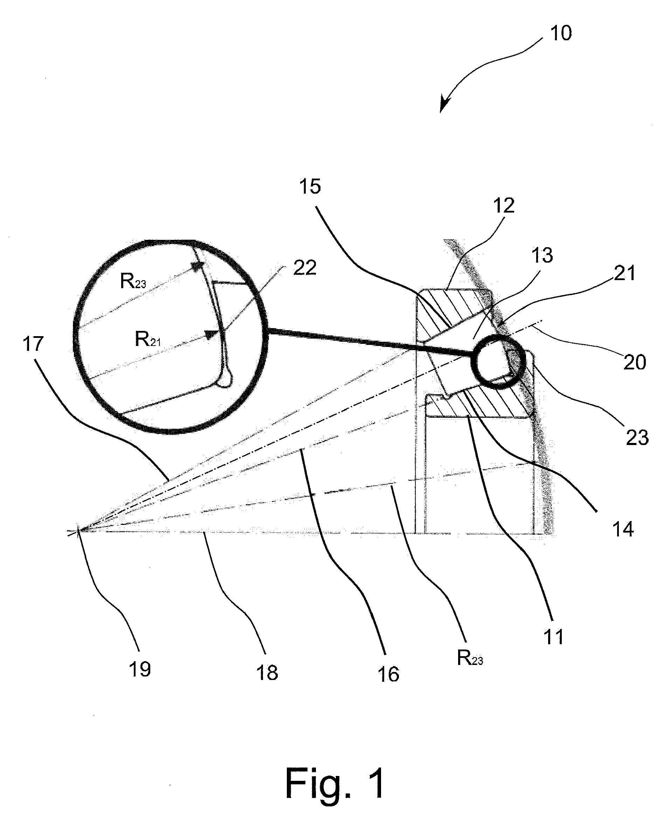

Zur näheren Erläuterung von Rollenlagern mit sphärischen Borden zeigt Fig. 1 in einer schematischen Darstellung einen Längsschnitt eines Rollenlagers 10, welches beispielhaft als Kegelrollenlager ausgebildet ist. Das Rollenlager 10 weist einen Lagerinnenring 11, einen Lageraußenring 12 und eine Mehrzahl von Rollen 13 auf, welche auf durch Innenseiten der Lagerringe 11, 12 gebildeten Laufflächen bzw. -bahnen 14, 15 abrollen können. Im Falle eines Kegelrollenlagers handelt es sich bei den Rollen bzw. Wälzkörpern 13 entsprechend um Kegelrollen.

Die Kegelrollen 13 können auf einer inneren Laufbahn 14, welche in den Lagerinnenring 11 eingeformt ist, und einer äußeren Laufbahn 15, welche in den Lageraußenring 12 eingeformt ist, abrollen. Die Laufbahnen 14, 15 sind bei einem Kegelrollenlager dreidimensional betrachtet als Konusmäntel ausgebildet. In dem in Fig. 1 gezeigten Längsschnitt des Kegelrollenlagers 10 definieren die Laufbahnen 14, 15 in einer gedachten Verlängerung eine innere Gerade 16 und eine äußere Gerade 17, welche sich auf einer Dreh- bzw. Rotationsachse 18 des Rollenlagers 10 an einem Drehpunkt 19 treffen.

Während eines Betriebs des Lagers 10 rotiert jede (Kegel-)Rolle 13 um eine eigene Rollenachse 20, wobei eine gedachte Verlängerung der Rollenachse 20 ebenfalls den Drehpunkt 19 schneidet. Durch eine relative Lage von innerer Gerade 16, äußerer Gerade 17, Lagerdrehachse 18 und Rollenachse 20, welche sich alle in dem Drehpunkt 19 schneiden, ist für die Kegelrollen 13 eine Rollbedingung auf den Laufbahnen 14, 15 realisiert, so dass bei einer Relativdrehung von Lagerinnenring 11 und Lageraußenring 12 die Kegelrollen 13 auf den Laufbahnen 14, 15 im Wesentlichen ohne Schlupf abrollen und ein Anteil an diesbezüglicher Gleitreibung minimiert ist.

Um auch in axialer Richtung, d. h. in Richtung der Lagerdrehachse 18, bei einer Aufnahme von Axialkräften auftretende Reibung zu optimieren, können bei Rollenlagern die verwendeten Rollen 13 an ihrer Stirnseite 21 eine durch einen ersten Radius R₂₁ bestimmte erste Krümmung aufweisen, sodass sich als Stirnseitenfläche der Rollen 13 ein Teil einer Kugelfläche ergibt, die, wie es in der Vergrößerung von Fig. 1. angedeutet ist, an einem Kontaktpunkt 22 in Kontakt mit einem geraden bzw. sphärisch ausgeführten Bord 23 beispielsweise des Lagerinnenrings 11 steht. Um einen definierten Kontaktpunkt 22 zu erhalten, weist die sphärisch gekrümmte Bordfläche eine durch einen zweiten Radius R₂₃ definierte zweite Krümmung auf, die geringer ist als die erste Krümmung der kugeligen Stirnseitenfläche 21 der Rollen 13.

Bei Rollenlagern, wie beispielsweise Zylinder-, Tonnen- oder Kegelrollenlagern, die mit geraden bzw. ebenen Borden ausgeführt sind, weist der Rolle-Bord-Kontakt im Vergleich zu sphärisch ausgeführten Borden eine höhere Flächenpressung (Hertzsche Pressung) zwischen der Rollenstirnseite 21 und der dieser zugewandten Bordfläche auf. Dabei versteht man unter der Hertzschen Pressung die größte Spannung, die in der Mitte der Berührungsfläche zweier elastischer Körper herrscht. Werden, wie bei Rollenlagern mit geraden Borden, zwei elastische Körper (gewölbte Rollenstirnseite und gerader bzw. ebener Bord) gegeneinander gepresst, dann berühren sie sich im idealisierten Fall nur punktförmig.

Durch die Elastizität entsteht aber im realen Fall an dem Kontaktpunkt 22 eine Abplattung und somit eine Berührungsfläche. Auf der Berührungsfläche entsteht in beiden Körpern eine charakteristische Spannungsverteilung (Flächenpressung), wobei die Spannung stets in der Mitte am höchsten ist. Berühren sich, wie hier, eine Kugeloberfläche und eine ebene Bordfläche, so entsteht eine Berühr- oder Kontaktellipse. Aufgrund der vergleichsweise hohen Flächenpressung kommt es bei Rollenlagern mit geraden Borden im Allgemeinen zu einem relativ schlechten Schmierfilmaufbau bei höheren wirkenden Kräften. Des Weiteren führen gerade bzw. ebene Borde im Vergleich zu sphärischen Borden zu kleineren Kontaktellipsen zwischen Rollenstirnseite und der dieser zugewandten Bordfläche, weshalb es zu einer Überschneidung der Kontaktellipse mit den Bordkanten nur bei extremen Belastungen kommen kann. Ebenso besteht im Allgemeinen bei gerade bzw. eben ausgeführten Borden eine geringe Empfindlichkeit des Kontaktpunktes 22 gegenüber Fluchtungsfehlern, sodass ein definierter Kontaktpunkt 22 zwischen Rolle 13 und Bord möglich ist. Während bei eben ausgeführten Borden einerseits eine größere Schiefstellung der Rollen 13 ermöglicht wird, ergibt sich andererseits eine vergleichsweise schlechte Führung der Rollen während des Laufs.

Kegelrollenlager im Großlagerbereich können, wie anhand von Fig. 1 gezeigt, mit sphärischen Borden 23 ausgeführt werden, was verglichen mit geraden bzw. ebenen Borden eine geringere Flächenpressung zwischen der Rollenstirnseite 21 und der der Rolle 13 zugewandten Bordfläche zur Folge hat. Sphärisch ausgeführte Borde 23 führen, verglichen zu geraden Borden, außerdem zu größeren Kontaktellipsen zwischen Rollenstirnseite 21 und gegenüberliegender Bordfläche, sodass es häufiger zu Überschneidungen der Kontaktellipse mit den Bordkanten und damit zu Kantenspannungen kommen kann. Im Allgemeinen besteht bei sphärisch ausgeführten Borden 23 eine höhere Empfindlichkeit des Kontaktpunktes 22 gegenüber Fluchtungsfehlern als es bei ebenen bzw. gerade ausgeführten Borden der Fall ist. Obwohl sphärische Borde einerseits eine geringere Schiefstellung der Rolle 13 zur Folge haben, kann andererseits aufgrund der engen Schmiegung zwischen Rollenstirnseite 21 und der der Rolle 13 zugewandten Bordfläche die Rolle 13 während des Laufs besser geführt werden. Durch unterschiedliche Wahl der Krümmungsradien (und/oder deren Ursprüngen) von Rollenstirnfläche 21 und sphärischer Bordfläche ist auch mit sphärischen Borden theoretisch ein definierter Kontaktpunkt 22 zwischen Rolle 13 und Bord 23 möglich.

Einer der Hauptnachteile eines sphärischen Bords ist jedoch die resultierende Empfindlichkeit des Kontaktpunktes 22 zwischen Rollenstirnseite 21 und Bord 23 im Hinblick auf Fluchtungsfehler. Abweichungen im Laufbahnwinkel, Rollenwinkel, Bordradius, sowie Rollenstirnseitenradius haben hierauf einen entscheidenden Einfluss.

CH 212693 A offenbart ein Rollenlager nach dem Oberbegriff des Anspruchs 1.

Die Aufgabe der vorliegenden Erfindung besteht somit darin, diese Empfindlichkeit des Kontaktpunktes zwischen Rollenstirnseite und Bord im Hinblick auf Fluchtungsfehler zu reduzieren.

Um die Empfindlichkeit des Rolle-Bord-Kontaktpunktes im Hinblick auf Fluchtungsfehler zu reduzieren, aber dennoch eine ausreichende Führung der Rolle während des Laufs gewährleisten zu können, wird vorliegend eine entsprechend optimierte Bordflächengeometrie vorgeschlagen. Die vorgeschlagene Bordflächengeometrie weist dazu einerseits einen sphärischen Abschnitt auf, der die Rollenführung sowie eine geringe Hertzsche Pressung gewährleisten soll. Andererseits weißt die vorgeschlagene Bordgeometrie auch einen im Folgenden so bezeichneten öffnenden Abschnitt auf, der ein größeres Spaltmaß, d. h. einen größeren Abstand, zwischen der Rollenstirnfläche und der dieser zugewandten Bordfläche erzeugt, als es mit einem rein sphärisch ausgeführten Bord gegeben wäre.

Ausführungsbeispiele der Erfindung sehen dazu ein Rollenlager mit einem Lagerring mit
einer Laufbahn für wenigstens eine Rolle vor, welche eine zumindest teilweise kugelig ausgebildete Rollenstirnfläche mit einer ersten Krümmung aufweist. Der Lagerring weist zur Ausleitung axialer Kräfte einen stirnseitig zu der Rolle angeordneten Bord mit einer der Rollenstirnfläche zugewandten Bordfläche auf, wobei die Bordfläche einen sphärischen Bordflächenabschnitt mit einer zweiten Krümmung, welche auf dem sphärischen Bordflächenabschnitt konstant oder variabel ausgeführt sein kann, umfasst. Die erste und die zweite Krümmung sind derart gewählt, um zwischen der kugelig ausgebildeten Rollenstirnfläche und dem sphärischen Bordflächenabschnitt ein erstes Spaltmaß (welches je nach Rolle-Bord-Geometrie auch ein mittleres Spaltmaß sein kann) zu erhalten. Außerdem weist die Bordfläche einen öffnenden Bordflächenabschnitt mit einer geringeren als die zweite Krümmung für ein größeres als das erste Spaltmaß zwischen der Rollenstirnfläche und dem öffnenden Bordflächenabschnitt auf.

Gemäß einem weiteren Aspekt wird auch ein Verfahren zur Herstellung eines Lagerrings für ein Rollenlager mit einer Rollenlaufbahn für wenigstens eine Rolle bereitgestellt, wobei die Rolle eine kugelig ausgebildete Rollenstirnfläche mit einer ersten Krümmung aufweist. Das Verfahren umfasst einen Schritt zum Bereitstellen eines zur Ausleitung axialer Kräfte stirnseitig zu der Rolle angeordneten Bords mit einer der Rollenstirnfläche zugewandten Bordfläche, wobei der Bereitstellungsschritt wiederum folgende Schritte aufweist:
- Bereitstellen eines sphärischen Flächenabschnitts der Bordfläche mit einer zweiten Krümmung, wobei die zweite Krümmung gegenüber der ersten Krümmung derart gewählt wird, dass zwischen der kugelig ausgebildeten Rollenstirnfläche und dem sphärischen Bordflächenabschnitt ein erstes Spaltmaß erhalten wird; und
- Erzeugen eines öffnenden Flächenabschnitts der Bordfläche mit einer geringeren als die zweite Krümmung, sodass zwischen der kugelig ausgebildeten Rollenstirnfläche und dem öffnenden Flächenabschnitt ein größeres Spaltmaß als das erste Spaltmaß erhalten wird.

Die zweite Krümmung des sphärischen Bordflächenabschnitts kann gemäß Ausführungsbeispielen konstant oder variabel ausgeführt sein.

Eine erste Tangentialebene an eine anstatt dem öffnenden Flächenabschnitt in diesem Bereich hypothetisch rein sphärisch verlaufende Bordfläche und eine zweite Tangentialebene an den öffnenden Bordflächenabschnitt schließen gemäß Ausführungsbeispielen einen maximalen Winkel α ein, der größer als 0° und kleiner als oder gleich 30° ist.

Der sphärische Bordflächenabschnitt erstreckt sich gemäß Ausführungsbeispielen über einen Bereich von wenigstens einem Drittel der Bordfläche.

Gemäß manchen Ausführungsbeispielen erstreckt sich der sphärische Bordflächenabschnitt von einem Eckbereich zwischen der Laufbahn und der Bordfläche aus hin zu einem radialen Ende des Bordes bzw. einer Bordkante. Der sphärische Bordflächenabschnitt kann bei einem Lagerinnenring also in einem unteren, einer inneren Lauffläche zugewandten Bereich des Bordes angrenzend zu einer Bord- bzw. Einstichkante liegen, wobei der öffnende Bordabschnitt in diesem Falle, angrenzend an den sphärischen Bordflächenabschnitt, im oberen Bereich des Bordes liegt. Bei einem Lageraußenring ist es entsprechend umgekehrt, d. h. der sphärische Bordflächenabschnitt liegt hier in einem oberen Bereich des Bordes angrenzend zu einer Bord- bzw. Einstichkante, wobei sich der öffnende Bordabschnitt dann im unteren, von der äußeren Lauffläche abgewandten Bereich des Bordes befindet.

Es ist gemäß anderen Ausführungsbeispielen jedoch ebenfalls möglich, dass der sphärisch ausgeführte Abschnitt nicht an der Bordkante zwischen Laufbahn und Bord angrenzt, sodass sich öffnende Bordflächenbereiche ober- und unterhalb des sphärischen Abschnitts befinden. In diesem Fall erstreckt sich ein erster öffnender Bordflächenabschnitt von einem Eckbereich zwischen der Laufbahn und der Bordfläche aus, wobei sich in radialer Richtung an den ersten öffnenden Bordflächenabschnitt der sphärische Bordflächenabschnitt anschließt. An einen dem ersten öffnenden Bordflächenabschnitt abgewandten Bereich des sphärischen Bordflächenabschnitts erstreckt sich in radialer Richtung ein zweiter öffnender Bordflächenabschnitt von dem sphärischen Bordflächenabschnitt aus hin zu einem radialen Ende des Bords.

Gemäß Ausführungsbeispielen handelt es sich bei dem Rollenlager um ein Kegelrollenlager. Die Rolle ist dann dementsprechend als Kegelrolle ausgebildet.

Weitere vorteilhafte Ausgestaltungen und Weiterbildungen sind Gegenstand der abhängigen Ansprüche.

Aufgrund der vorgeschlagenen Rolle-Bord-Kontaktgeometrie in Form eines sphärischen Bordflächenabschnitts in Kombination mit einem unmittelbar daran angrenzenden öffnenden Bordflächenabschnitt kann die Rollenführung aufgrund des sphärisch ausgebildeten Bordanteils während des Laufs erhalten bleiben. Der sphärische Bordflächenabschnitt sorgt außerdem für eine geringe Hertzsche Pressung. Der öffnende Bordabschnitt kann eine Größe der Kontaktellipse im Vergleich zu rein sphärischen Borden reduzieren, wodurch eine Überschneidung der Kontaktellipse mit den Bordkanten vermieden werden kann. Aufgrund der öffnenden Bordbereiche besteht gegenüber Fluchtungsfehlern ebenfalls eine geringere Empfindlichkeit der Lage des Kontaktpunktes zwischen Rollenstirnseite und Bord, sodass ein definierter Kontaktpunkt zwischen Rolle und Bord ermöglicht wird.

Die vorgeschlagene Rolle-Bordgeometrie ist so ausgelegt, dass der Kontaktpunkt bzw. - bereich zwischen Rollenstirnseite und Bord bei idealer Geometrie im sphärischen Bordbereich liegt.

Die Empfindlichkeit des Kontaktpunktes gegenüber Fluchtungsfehlern ist im sphärischen Bordbereich vergleichbar mit der Empfindlichkeit eines rein sphärischen Bords. Verschiebt sich der Kontaktpunkt jedoch aufgrund von Formabweichungen in den öffnenden Bordbereich, so ist die Empfindlichkeit stark reduziert, was ein "Wandern" des theoretischen Kontaktpunktes über die Bordkanten hinaus und somit auch die oben bereits erwähnten hohen Kantenspannungen verhindern kann.

Ausführungsbeispiele der vorliegen Erfindung werden nachfolgend bezugnehmend auf die beiliegenden Figuren detaillierter erläutert. Es zeigen:
- Fig. 1: einen schematischen Längsschnitt durch ein Rollenlager mit sphärischen Borden;
- Fig. 2: einen schematischen Längsschnitt durch ein Rollenlager mit einer Bordfläche mit einem sphärischen Bordflächenabschnitt und einem öffnenden Bordflächenabschnitt gemäß einem Ausführungsbeispiel der vorliegenden Erfindung;
- Fig. 3: eine vergrößernde Darstellung des Rolle-Bord-Kontaktbereichs gemäß Fig. 2;
- Fig. 4: einen schematischen Längsschnitt durch ein Rollenlager mit einer Bordfläche mit einem sphärischen Bordflächenabschnitt und einem öffnenden Bordflächenabschnitt gemäß einem weiteren Ausführungsbeispiel der vorliegenden Erfindung;
- Fig. 5: eine vergrößernde Darstellung des Rolle-Bord-Kontaktbereichs gemäß Fig. 4; und
- Fig. 6: ein schematisches Flussdiagramm für ein Herstellungsverfahren für ein Rollenlager mit einem Bord mit einem sphärischen Bordbereich und einem öffnenden Bordbereich.

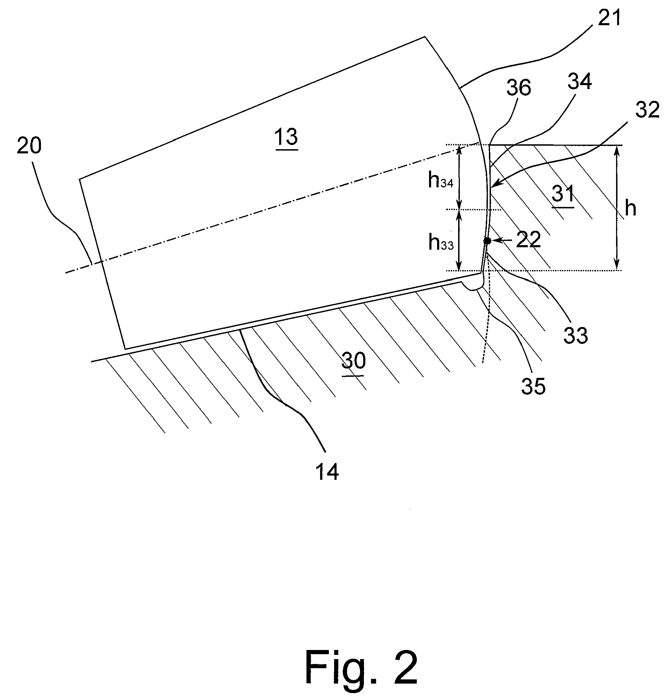

Fig. 2 zeigt in einem schematischen Längsschnitt einen Ausschnitt eines Rollenlagers gemäß einem Ausführungsbeispiel der vorliegenden Erfindung.

Dargestellt ist ein Teil eines Lagerrings 30 für das Rollenlager mit einer Laufbahn 14 für wenigstens eine Rolle 13. Die Rolle 13 weist eine gekrümmte Rollenstirnfläche 21, die z. B. teilkugelig ausgebildet sein kann, mit einer ersten Krümmung auf. Zur Ausleitung axialer Kräfte weist der Lagerring 31 einen stirnseitig zu bzw. an der Stirnseite der Rolle 13 angeordneten Bord 31 mit einer der Rollenstirnfläche zugewandten Bordfläche 32 auf.

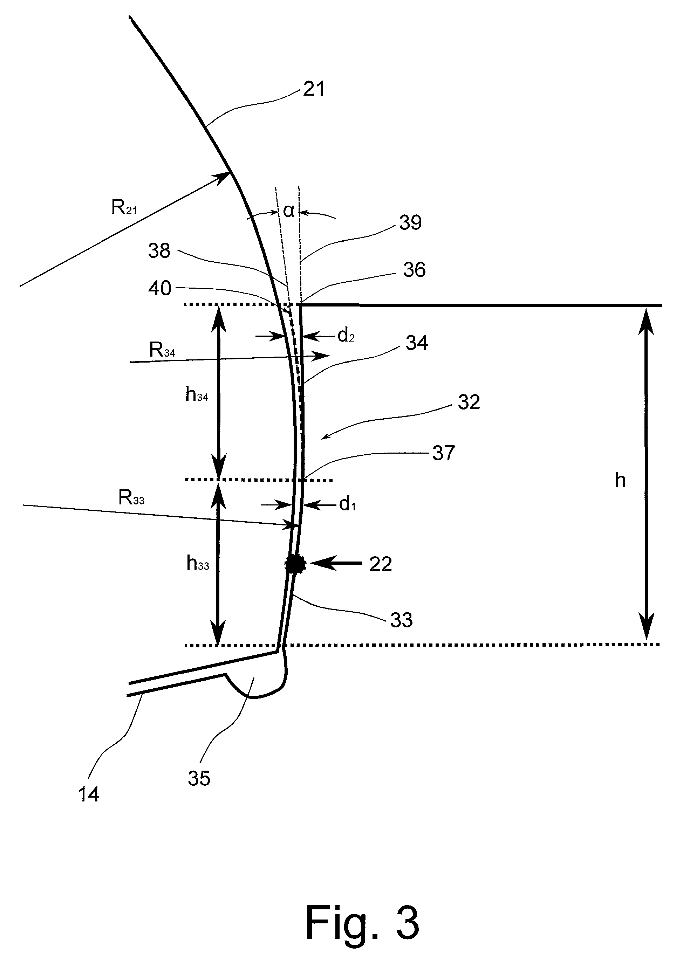

Wie es neben Fig. 2 auch in der vergrößernden Ansicht der Fig. 3 dargestellt ist, umfasst die der Rollenstirnfläche 21 zugewandte Bordfläche 32 einen sphärischen Bordflächenabschnitt 33 mit einer zweiten Krümmung, wobei die erste und die zweite Krümmung derart gewählt sind, um zwischen der kugelig ausgebildeten Rollenstirnfläche 21 und dem sphärischen Bordflächenabschnitt 33 ein erstes Spaltmaß d₁ mit einem Maximum d_{1,max} zu erhalten. Die Bordfläche 32 weist außerdem einen öffnenden Bordflächenabschnitt 34 mit einer geringeren Krümmung als die zweite Krümmung auf, sodass zwischen der Rollenstirnfläche 21 und dem öffnenden Bordflächenabschnitt 34 ein größeres Spaltmaß d₂ als das (maximale) erste Spaltmaß d_{1,max} erhalten wird. Die zweite Krümmung des sphärischen Bordflächenabschnitts 33 kann dabei gemäß Ausführungsbeispielen konstant oder variabel ausgeführt sein.

Unter der Krümmung soll vorliegend eine Richtungsänderung pro Längeneinheit verstanden werden. Die Krümmung z. B. einer Geraden ist überall gleich null, weil sich ihre Richtung nicht ändert. Ein Kreis mit einem Radius r hat überall gleiche Krümmung (nämlich 1/r), denn seine Richtung ändert sich überall gleich stark. Bei allen anderen Kurven wechselt die Krümmung von Kurvenpunkt zu Kurvenpunkt. Die Krümmung einer Kurve in einem Punkt gibt also an, wie stark die Kurve in der unmittelbaren Umgebung des Punktes von einer Geraden abweicht. Einer gewölbten Fläche, wie beispielsweise der Bordfläche 32, merkt man ihre Krümmung beispielsweise an einer nach außen quadratisch zunehmenden Abweichung der Fläche von ihrer Tangentialebene an. Eine verstärkte Krümmung macht sich dann als stärkere Abweichung von der Ebene bemerkbar. Für den vorliegenden Fall bedeutet dies also beispielsweise, dass der sphärische Bordflächenabschnitt 33 pro Weglänge stärker von einer Tangentialebene an den öffnenden Bordflächenabschnitt 34 der Bordfläche 32 abweicht als Bereiche des öffnenden Bordflächenabschnitts 34 selbst.

Die kugelige Rollenstirnfläche 21 wird durch einen ersten Radius R₂₁ beschrieben, der seinen Ursprung im Wesentlichen auf der Rotationachse 20 der Rolle 13 haben kann. Der sphärische Bordflächenabschnitt 33 wird durch einen zweiten Radius R₃₃ beschrieben, der größer ist als der erste Radius R₂₁ (d. h. R₂₁ < R₃₃) und der seinen Ursprung im Wesentlichen auf der Rotationachse 18 des Rollenlagers 10 haben kann. Die Radien R₂₁ und R₃₃ bzw. die durch sie beschriebenen Flächen 21 und 33 können zwar prinzipiell konzentrisch, d. h. mit identischem Ursprung auf der Rollenrotationachse 20, angeordnet sein. Um aber zumindest theoretisch einen definierten Kontaktpunkt 22 zwischen Rollenstirnfläche 21 und sphärischem Bordflächenabschnitt 33 zu erhalten, können die Radien R₂₁ und R₃₃ bzw. die durch sie beschriebenen Flächen 21 und 33 in der Regel (wie hier) auch nicht konzentrisch, d. h. mit nicht identischem Ursprung auf der Rollenrotationachse 20 bzw. Lagerrotationsachse 18, angeordnet sein. Jedenfalls sind der erste R₂₁ und der zweite Radius R₃₃ und deren Ursprünge so gewählt, um zwischen der kugelig ausgebildeten Rollenstirnfläche 21 und dem sphärischen Bordflächenabschnitt 33 ein erstes Spaltmaß d₁ zu erhalten, welches einen maximalen Wert d_{1,max} annehmen kann. Der öffnende Bordflächenabschnitt 34 weist nun aber erfindungsgemäß eine geringere Krümmung als der sphärische Bordflächenabschnitt 33 auf, sodass zwischen dem öffnenden Bordflächenabschnitt 34 und der kugeligen Rollenstirnfläche 21 ein zweites Spaltmaß d₂ entsteht, welches, ausgehend von dem maximalen Wert d_{1,max} hin zu einem radialen Ende des öffnenden Bordflächenabschnitts 34 bzw. hin zu einer der Laufbahn 14 abgewandten Bordkante 36 bis zu einem Maximalwert d_{2,max} immer größer wird, d. h. d_{1,max} ≤ d₂ ≤ d_{2,max}.

Bei dem in den Fig. 2 und 3 skizzierten Ausführungsbeispiel erstreckt sich der sphärische Bordflächenabschnitt 33 von einem Eckbereich 35 zwischen der Laufbahn 14 und der Bordfläche 32 in Richtung zu der der Laufbahn 14 abgewandten Bordkante 36. Der sphärische Bordflächenabschnitt 33 kann bei einem Lagerinnenring also beispielsweise in einem unteren, einer inneren Lauffläche 14 zugewandten Bereich des Bordes 31 angrenzend zu einer Bord- bzw. Einstichkante 35 liegen, wobei der öffnende Bordabschnitt 34 in diesem Falle im oberen Bereich des Bordes 31 liegt. Bei einem Ausführungsbeispiel für einen Lageraußenring wäre es entsprechend umgekehrt, d. h. der sphärische Bordflächenabschnitt 33 würde hier in einem in radialer Richtung oberen Bereich des Bordes angrenzend zu einer Bord- bzw. Einstichkante liegen, wobei der öffnende Bordabschnitt dann im unteren, von einer äußeren Lauffläche abgewandten Bereich des führenden Bordes läge.

Selbstverständlich läge auch hier der sphärische Bordflächenabschnitt angrenzend an die Lauffläche.

Wie es in Fig. 3 gezeigt ist, grenzen der sphärische Bordflächenabschnitt 33 und der öffnende Bordflächenabschnitt 34 in einem Grenzbereich 37 unmittelbar aneinander. D. h., in dem Grenzbereich 37, beispielsweise einer Grenzlinie, gehen der sphärische Bordflächenabschnitt 33 und der öffnende Bordflächenabschnitt 34 unmittelbar ineinander über. Vorzugsweise verläuft die Bordoberfläche 32 in dem Grenzbereich 37 stetig, d. h. ohne Ecken, Knicke oder Kanten, so dass es möglich ist, eine Tangentialebene an die Bordfläche 32 durch einen Begrenzungspunkt in dem Grenzbereich 37 zu legen.

Gemäß Ausführungsbeispielen ermöglicht der öffnende Bordflächenabschnitt 34 gegenüber dem sphärischen Bordflächenabschnitt 33 eine Öffnung des Bords 31 bzw. der Bordfläche 32 in einem Winkelbereich α von größer als 0° bis 30°, vorzugsweise in einem Bereich 0° 0' 6" ≤ α ≤ 30°. Den Öffnungswinkel α des öffnenden Bordflächenabschnitt 34 gegenüber dem sphärischen Bordflächenabschnitt 33 kann man beispielsweise erhalten, indem man den größten Winkel zwischen einer Tangentialebene 38 an den hypothetisch in den öffnenden Bordflächenabschnitt hinein verlängerten sphärischen Bordflächenabschnitt und einer Tangentialebene 39 an den öffnenden Bordflächenabschnitt 34 ermittelt. Dazu kann der größte Winkel zwischen einer Schar von Tangentialebenen 38 an den hypothetisch in den öffnenden Bordflächenabschnitt hinein verlängerten sphärischen Bordflächenabschnitt und einer Schar von Tangentialebenen 39 an den öffnenden Bordflächenabschnitt 34 ermittelt werden. Der hypothetisch in den öffnenden Bordflächenabschnitt hinein verlängerte sphärische Bordflächenabschnitt ist in Fig. 3 mit Bezugszeichen 40 angedeutet. Der (größte) Winkel α ergibt sich also durch eine Verkippung der Tangentialebene 39 an den öffnenden Bordflächenabschnitt 34 in Richtung der Tangentialebene 38 an den gedachten und in den öffnenden Bordflächenabschnitt hinein verlängerten sphärischen Bordflächenabschnitt eines komplett mit Radius R₃₃ sphärisch ausgeführten Bords. Dabei sind jeweils die Tangentialebenen an dem radial außen liegenden Bordende des öffnenden Bordflächenabschnitts 34 und dem entsprechenden Bordende des gedachten und in den öffnenden Bordflächenabschnitt hinein verlängerten sphärischen Bordflächenabschnitts gemeint.

Gemäß Ausführungsbeispielen der vorliegenden Erfindung erstreckt sich der sphärische Bordflächenabschnitt 33 über einen wenigstens einem Drittel einer Bordhöhe h des Bords 31 entsprechenden Bordflächenabschnitt. D. h., eine Höhe h₃₃ des sphärischen Bordflächenabschnitts 33 entspricht wenigstens einem Drittel der Gesamtbordhöhe h, also h₃₃ ≥ 1/3h. Dementsprechend beträgt eine Höhe h₃₄ des unmittelbar daran angrenzenden öffnenden Bordflächenabschnitts 34 maximal zwei Drittel der Gesamtbordhöhe h, also h₃₄ ≤ 2/3h. Vorzugsweise liegt eine Höhe h₃₃ des sphärischen Bordflächenabschnitts 33 in einem Bereich von 1/3h ≤ h₃₃ ≤ 3/4h und dementsprechend die Höhe h₃₄ des öffnenden Bordflächenabschnitts 34 in einem Bereich 1/4h ≤ h₃₄ ≤ 2/3h.

Für die Ausführung des öffnenden Bordbereichs 34 gibt es unterschiedliche Möglichkeiten. Obwohl die Figuren 2 und 3 ein Ausführungsbeispiel skizzieren, bei dem der öffnende Bordflächenabschnitt 34 durch einen sich radial an den sphärischen Bordflächenabschnitt 33 anschließenden weiteren sphärischen, aber weniger stark gekrümmten Bordflächenabschnitt 34 gebildet wird, und der somit durch einen Radius R₃₄ größer als der zweite Radius R₃₃ definiert wird, können andere Ausführungsbeispiele der vorliegenden Erfindung auch vorsehen, dass der öffnende Bordflächenabschnitt 34 durch einen sich tangential an den sphärischen Bordflächenabschnitt 33 anschließenden geraden bzw. ebenen Bordflächenabschnitt gebildet wird. Dieser ebene Bordflächenabschnitt weist dann quasi einen unendlich großen Radius R₃₄ auf, der demzufolge auch größer ist als der den sphärischen Bordflächenabschnitt 33 beschreibende Radius R₃₃. Ferner kann sich der Radius R₃₄ des öffnenden Bereichs 34 - ausgehend von R₃₃ - auch innerhalb des öffnenden Bordflächenabschnitts 34 von innen nach außen kontinuierlich vergrößern.

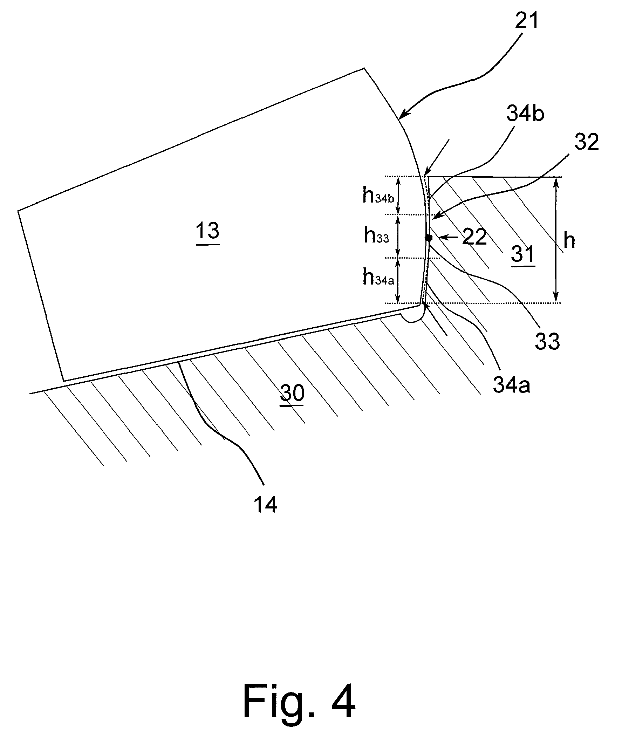

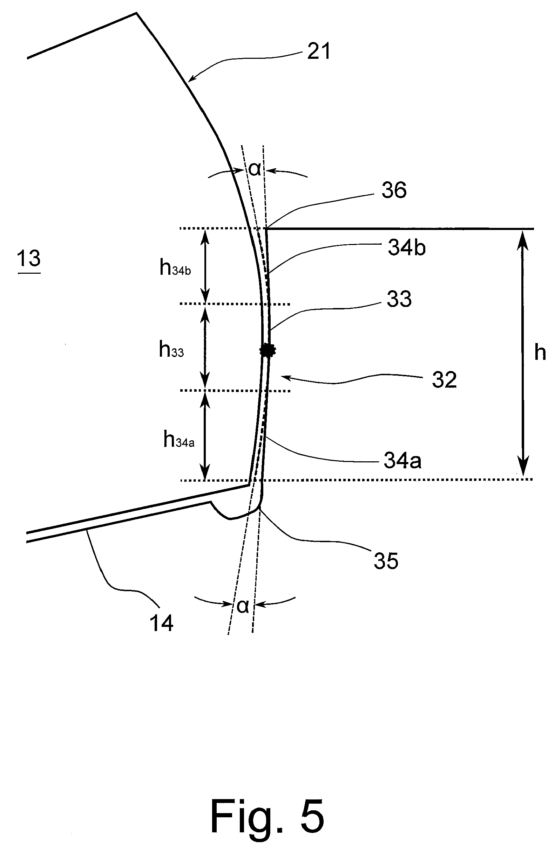

Nachdem anhand der Figuren 2 und 3 Ausführungsbeispiele beschrieben wurden, bei denen der sphärische Abschnitt 33 im unteren Bereich des Bordes 31 (angrenzend zur Bordkante/Einstichkante 35) und der öffnende Bordabschnitt 33 im oberen Bereich des Bordes 31 angeordnet ist, werden nachfolgend anhand der Figuren 4 und 5 andere Ausführungsbeispiele beschrieben, bei denen der sphärisch ausgeführte Abschnitt 33 nicht an der Bordkante 35 angrenzt, sodass sich jeweils ein öffnender Bordbereich 34 ober- und unterhalb des sphärischen Abschnitts 33 befindet.

Gemäß dem in den Fig. 4 und 5 skizzierten Ausführungsbeispiel erstreckt sich ein erster öffnender Bordflächenabschnitt 34a von einem Eckbereich 35 zwischen der Laufbahn 14 und der Bordfläche 32. Unmittelbar daran angrenzend schließt sich in radialer Richtung der sphärische Bordflächenabschnitt 33 an den ersten öffnenden Bordflächenabschnitt 34a an. An einen dem ersten öffnenden Bordflächenabschnitt 34a abgewandten Ende des sphärischen Bordflächenabschnitts 33 schließt sich in radialer Richtung unmittelbar ein zweiter öffnender Bordflächenabschnitt 34b an den sphärischen Bordflächenabschnitt 33 an und erstreckt sich hin zu dem radialen Ende bzw. der Kante 36 des Bords 31.

Gemäß den Figuren 4 und 5 ist der sphärische Bordflächenabschnitt 33 also zwischen zwei an unterschiedlichen Enden des sphärischen Bordflächenabschnitts 33 angrenzenden öffnenden Bordflächenabschnitten 34a, b eingebettet. Auch hier entspricht die Höhe h₃₃ des sphärischen Bordflächenabschnitts 33 wenigstens einem Drittel der Gesamtbordhöhe h, also h₃₃ ≥ 1/3h. Bei Ausführungsbeispielen liegt die Höhe h₃₃ des sphärischen Bordflächenabschnitts 33 vorzugsweise in einem Bereich 1/3h ≤ h₃₃ ≤ 1/2h. Dementsprechend beträgt die Summe der Höhen h₃₄ₐ, h_{34b} der unmittelbar daran angrenzenden öffnenden Bordflächenabschnitte 34a, b maximal zwei Drittel der Gesamtbordhöhe h, also (h₃₄ₐ + h_{34b}) ≤ 2/3h. Vorzugsweise unterschreiten die Höhen h₃₄ₐ, h_{34b} der öffnenden Bordflächenabschnitte 34a, 34b jeweils nicht 1/6h. Die Bordabschnitte 34a, 34b können auch unterschiedliche Höhen h₃₄ₐ und h_{34b} aufweisen (z. B. h₃₃ = 1/3h; h₃₄ₐ = 1/6h; h_{34b} = 3/6h).

Bei sämtlichen Ausführungsbeispielen ist die Rolle-Bord-Kontaktgeometrie so gewählt, dass der Kontaktpunkt 22 im Bereich des sphärischen Bordflächenabschnitts 33 liegt. Die öffnenden Bereiche 34, welche ebenfalls sphärisch, jedoch mit geringerer Krümmung als der sphärische Bereich 33, oder eben bzw. gerade ausgebildet sein können, ermöglichen jeweils eine Öffnung α des die Rolle 13 führenden Bords 31 von ca. 0° 0' 6" bis 30° im Vergleich zu einer Bordgeometrie mit einem komplett sphärisch ausgeführten Bord.

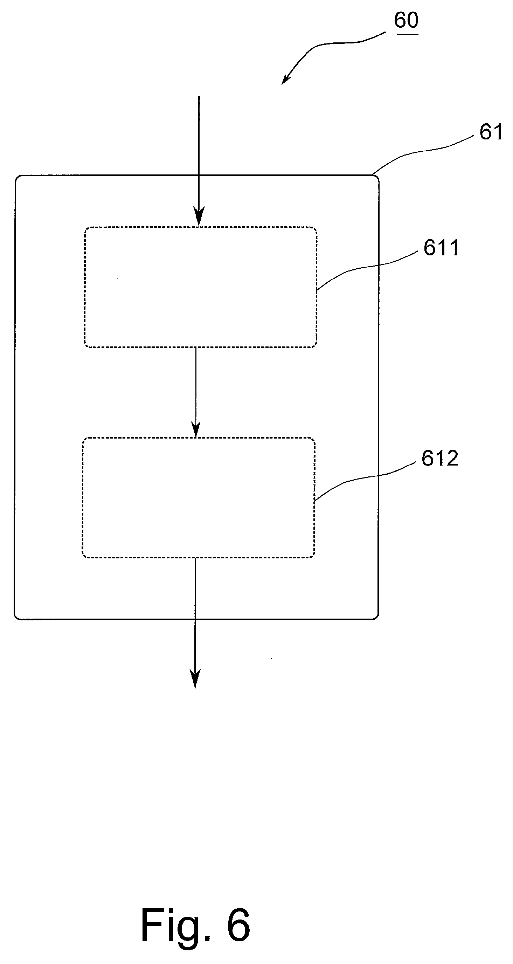

Anhand von Fig. 6 wird nun der Vollständigkeit halber noch ein Herstellungsverfahren 60 zum Herstellen eines Lagerrings für ein Rollenlager mit einer Laufbahn für wenigstens eine Rolle 13 erläutert. Die Rolle 13 weist eine kugelig bzw. teilkugelig ausgebildete Rollenstirnfläche 21 mit einer ersten Krümmung auf.

Das Herstellungsverfahren 60 weist einen Schritt 61 zum Bereitstellen eines zur Ausleitung axialer Kräfte stirnseitig zu der Rolle angeordneten Bords 31 mit einer der Rollenstirnfläche 21 zugewandten Bordfläche 32 auf.

Der Schritt 61 kann wiederum untergliedert werden in einen ersten Unterschritt 611 zum Bereitstellen/Erzeugen eines sphärischen Flächenabschnitts 33 der Bordfläche 32 mit einer zweiten Krümmung, wobei die zweite Krümmung gegenüber der ersten Krümmung derart gewählt wird, um zwischen der kugelig ausgebildeten Rollenstirnfläche 21 und dem sphärischen Bordflächenabschnitt 33 ein erstes Spaltmaß d₁ zu erhalten.

Gemäß einem zweiten Unterschritt 612 wird auch ein öffnender Flächenabschnitt 34 der Bordfläche 32 mit einer geringeren als die zweite Krümmung für ein gegenüber dem ersten Spaltmaß d₁ vergrößertes Spaltmaß d₂ zwischen der Rollenstirnfläche 21 und dem öffnenden Bordflächenabschnitt 34 bereitgestellt bzw. erzeugt. Darauf wurde im Vorhergehenden bereits detailliert eingegangen.

Zusammenfassend ist also die vorgeschlagene Bordform anzustreben, um die Empfindlichkeit des Rolle-Bord-Kontaktpunktes 22 gegenüber Fluchtungsfehlern und Schiefstellungen des Lagers in der Anwendung zu reduzieren, aber dennoch eine ausreichende Führung der Rolle 13 während des Laufs auf der Laufbahn gewährleisten zu können. Die erfindungsgemäße Bordgeometrie weißt einen sphärischen Abschnitt 33 auf, der die Rollenführung sowie eine geringe Hertzsche Pressung gewährleisten kann. Des Weiteren weißt die vorgeschlagene Bordgeometrie wenigstens einen öffnenden Abschnitt 34 auf, der ein größeres Spaltmaß zwischen der Rollenstirnfläche 21 und der Bordfläche 32 erzeugt, als es mit einem rein sphärischem Bord gegeben wäre.

Der sphärische Abschnitt 33 kann beispielsweise im unteren Bereich des Bordes 31 (angrenzend zur Bordkante/Einstichkante) zur Anwendung kommen, wobei der öffnende Bordabschnitt 34 in diesem Falle im oberen Bereich des Bordes liegt (siehe Fig. 2+3). Es ist ebenfalls möglich, dass der sphärisch ausgeführte Abschnitt 33 nicht an einer Bordkante angrenzt, sodass sich öffnende Bordbereiche 34a, b ober- und unterhalb des sphärischen Abschnitts befinden (siehe Fig. 4+5).

Die erfindungsgemäße Rolle-Bord-Kontaktgeometrie sphärischer Bord in Kombination mit einem öffnenden Abschnitt weißt folgende vorteilhafte Eigenschaften auf:
- Aufgrund des sphärischen Bordanteils 33 bleibt die Rollenführung während des Laufs erhalten,
- Geringe Hertzsche Pressung aufgrund des sphärischen Bordanteils 33,
- Die öffnenden Bordabschnitte 34 reduzieren die Größe der Kontaktellipse im Vergleich zu rein sphärischen Borden, wodurch eine Überschneidung der Kontaktellipse mit den Bordkanten vermieden wird,
- Aufgrund der öffnenden Bordbereiche 34 besteht eine geringere Empfindlichkeit der Lage des Kontaktpunktes 22 zwischen Rollenstirnseite 21 und Bord 31 im Hinblick auf Fluchtungsfehler,
- Ein definierter Kontaktpunkt 22 zwischen Rolle 13 und Bord 31 ist möglich.

Die vorgeschlagene Rolle-Bordgeometrie ist so ausgelegt, dass der Kontaktpunkt zwischen Rollenstirnseite und Bord bei idealer Geometrie im sphärischen Bordbereich liegt. Die Empfindlichkeit des Kontaktpunktes gegenüber Fluchtungsfehlern ist im sphärischen Bordbereich identisch mit der Empfindlichkeit eines rein sphärischen Bords. Verschiebt sich der Kontaktpunkt aufgrund von Fluchtungsfehlern in den öffnenden Bordbereich, so ist die Empfindlichkeit stark reduziert, was ein "wandern" des theoretischen Kontaktpunktes über die Bordkanten hinaus und somit auch hohe Kantenspannungen verhindern kann.

Für die Ausführung des öffnenden Bordbereichs gibt es unterschiedliche Möglichkeiten. Zum einen wäre ein gerader Bordbereich denkbar, der tangential an den Bogen des sphärischen Bordbereichs anschließt. Der öffnende Bordbereich könnte auch durch einen Radius definiert werden, der größer ist als der Radius des sphärischen Bereichs.

Obwohl die vorliegende Erfindung anhand einer Ausführungsform mit Kegelrollenlagern und Kegelrollen beschrieben wurde, sind Ausführungsbeispiele nicht auf derartige Ausgestaltungen beschränkt. Prinzipiell kann die vorliegende Erfindung auch auf andere Rollen und Rollenlager, wie z.B. auf Zylinder- und Tonnenlager, angewendet werden.

### Bezugszeichenliste

- 10: Rollenlager
- 11: Lagerinnenring
- 12: Lageraußenring
- 13: Rolle
- 14: innere Rollenlaufbahn
- 15: äußere Rollenlaufbahn
- 16: innere Gerade
- 17: äußere Gerade
- 18: Lagerrotationsachse
- 19: Drehpunkt
- 20: Rollenachse
- 21: Rollenstirnseite
- 22: Kontaktpunkt
- 23: sphärischer Bord
- 24: Bordflächenradius
- 30: Teil eines Lagerrings
- 31: teils sphärischer, teils geöffneter Bord
- 32: Bordfläche
- 33: sphärischer Bordflächenabschnitt
- 34: öffnender Bordflächenabschnitt
- 35: Eckbereich zwischen Laufbahn und Bordfläche
- 36: der Laufbahn abgewandte Bordkante
- 37: Grenze zwischen sphärischem und öffnenden Bordflächenabschnitt
- 38: Tangentialebene an hypothetisch in öffnenden Bordflächenabschnitt hinein verlängerten sphärischen Bordflächenabschnitt
- 39: Tangentialebene an öffnenden Bordflächenabschnitt
- 40: Bordflächengeometrie bei rein sphärischem Bord
- 60: Herstellungsverfahren
- 61: Schritt zum Bereitstellen eines zur Ausleitung axialer Kräfte stirnseitig zur Rolle angeordneten Bords mit der Rollenstirnfläche zugewandter Bordfläche
- 611: Unterschritt zum Bereitstellen eines sphärischen Flächenabschnitts
- 612: Unterschritt zum Bereitstellen eines öffnenden Flächenabschnitts

## Patentansprüche

1. Rollenlager mit einem Lagerring (30) mit einer Laufbahn (14; 15) für wenigstens eine Rolle (13) des Rollenlagers, welche eine zumindest teilweise kugelig ausgebildete Rollenstirnfläche (21) mit einer ersten Krümmung aufweist, wobei der Laggerring umfasst:
einen zur Ausleitung axialer Kräfte stirnseitig zu der Rolle (13) angeordneten Bord (31) mit einer der Rollenstirnfläche zugewandten Bordfläche (32), die einen sphärischen Bordflächenabschnitt (33) mit einer zweiten Krümmung aufweist,
wobei die erste und die zweite Krümmung derart gewählt sind, um zwischen der kugelig ausgebildeten Rollenstirnfläche (21) und dem sphärischen Bordflächenabschnitt (33) ein erstes Spaltmaß (d₁) zu erhalten,
**dadurch gekennzeichnet, dass** die Bordfläche (32) außerdem einen öffnenden Bordflächenabschnitt (34) mit einer geringeren als die zweite Krümmung für ein größeres Spaltmaß (d₂) als das erste Spaltmaß (d₁) zwischen der Rollenstirnfläche (21) und dem öffnenden Bordflächenabschnitt (34) aufweist.

2. Rollenlager nach Anspruch 1, wobei ein Winkel (α) zwischen einer ersten Tangentialebene (38) an einen hypothetisch in den öffnenden Bordflächenabschnitt (34) hinein verlängerten sphärischen Bordflächenabschnitt (40) und einer zweiten Tangentialebene (39) an den öffnenden Bordflächenabschnitt (34) in einem Bereich von größer als 0° bis 30° liegt.

3. Rollenlager nach einem der vorhergehenden Ansprüche, bei dem sich der sphärische Bordflächenabschnitt (33) über einen wenigstens einem Drittel einer Bordhöhe (h) des Bords (31) entsprechenden Bordflächenabschnitt erstreckt.

4. Rollenlager nach einem der vorhergehenden Ansprüche, bei dem sich der sphärische Bordflächenabschnitt (33) von einem Eckbereich (35) zwischen der Laufbahn (14) und der Bordfläche (32) aus erstreckt.

5. Rollenlager nach einem der Ansprüche 1 bis 3, bei dem sich ein erster öffnender Bordflächenabschnitt (34a) von einem Eckbereich (35) zwischen der Laufbahn (14) und der Bordfläche (32) aus erstreckt, wobei sich in radialer Richtung an den ersten öffnenden Bordflächenabschnitt (34a) der sphärische Bordflächenabschnitt (33) anschließt und, wobei sich an einen dem ersten öffnenden Bordflächenabschnitt (34a) abgewandten Bereich des sphärischen Bordflächenabschnitts (33) in radialer Richtung ein zweiter öffnender Bordflächenabschnitt (34b) von dem sphärischen Bordflächenabschnitt (33) aus hin zu einem radialen Ende (36) des Bords (31) erstreckt.

6. Rollenlager nach einem der vorhergehenden Ansprüche, wobei der öffnende Bordflächenabschnitt (34) durch einen sich tangential an den sphärischen Bordflächenabschnitt (33) anschließenden ebenen Bordflächenabschnitt gebildet wird.

7. Rollenlager nach einem der Ansprüche 1 bis 5, wobei der öffnende Bordflächenabschnitt (34) durch einen sich an den sphärischen Bordflächenabschnitt (33) anschließenden weiteren sphärischen Bordflächenabschnitt gebildet wird, der eine geringere Krümmung als die zweite Krümmung des sphärischen Bordflächenabschnitts (33) aufweist.

8. Rollenlager nach einem der vorhergehenden Ansprüche, wobei das Rollenlager ein Kegelrollenlager ist und die Rolle (13) als Kegelrolle ausgebildet ist.

9. Rollenlager nach einem der vorhergehenden Ansprüche, wobei der Lagerring (30) ein Lagerinnenring ist.

10. Verfahren (60) zum Herstellen eines Lagerrings (30) für ein Rollenlager mit einer Laufbahn (14; 15) für wenigstens eine Rolle (13), wobei die Rolle eine kugelig ausgebildete Rollenstirnfläche (21) mit einer ersten Krümmung aufweist, mit einem Schritt (61) zum Bereitstellen eines zur Ausleitung axialer Kräfte stirnseitig zu der Rolle (13) angeordneten Bords (31) mit einer der Rollenstirnfläche (21) zugewandten Bordfläche (32), wobei der Schritt (61) zum Bereitstellen des Bords (31) folgende Schritte aufweist:
Bereitstellen (611) eines sphärischen Flächenabschnitts (33) der Bordfläche mit einer zweiten Krümmung, wobei die zweite Krümmung gegenüber der ersten Krümmung derart gewählt wird, um zwischen der kugelig ausgebildeten Rollenstirnfläche (21) und dem sphärischen Bordflächenabschnitt (33) ein erstes Spaltmaß (d₁) zu erhalten;
**gekennzeichnet durch**
ein Erzeugen (612) eines öffnenden Flächenabschnitts (34) der Bordfläche mit einer geringeren als die zweite Krümmung für ein gegenüber dem ersten Spaltmaß (d₁) vergrößertes Spaltmaß (d₂) zwischen der Rollenstirnfläche (21) und dem öffnenden Bordflächenabschnitt (34).

## Claims

1. Roller bearing having a bearing ring (30) with a raceway (14; 15) for at least one roller (13) of the roller bearing, which roller (13) has a roller end face (21) of at least partially spheroid configuration with a first curvature, the bearing ring comprising:
a rim (31) which is arranged on the end side with respect to the roller (13) in order to dissipate axial forces, with a rim face (32) which faces the roller end face and has a spherical rim face section (33) with a second curvature,
the first and the second curvature being selected so as to obtain a first gap dimension (d₁) between the roller end face (21) of spheroid configuration and the spherical rim face section (33),
**characterized in that**, moreover, the rim face (32) has a widening rim face section (34) with a smaller curvature than the second curvature for a greater gap dimension (d₂) than the first gap dimension (d₁) between the roller end face (21) and the widening rim face section (34).

2. Roller bearing according to Claim 1, an angle (α) between a first tangential plane (38) to a spherical rim face section (40) which is extended hypothetically into the widening rim face section (34) and a second tangential plane (39) to the widening rim face section (34) lying in a range of from greater than 0° to 30°.

3. Roller bearing according to either of the preceding claims, in which the spherical rim face section (33) extends over a rim face section which corresponds to at least one third of a rim height (h) of the rim (31).

4. Roller bearing according to one of the preceding claims, in which the spherical rim face section (33) extends from a corner region (35) between the raceway (14) and the rim face (32).

5. Roller bearing according to one of Claims 1 to 3, in which a first widening rim face section (34a) extends from a corner region (35) between the raceway (14) and the rim face (32), the first widening rim face section (34a) being adjoined in the radial direction by the spherical rim face section (33), and a second widening rim face section (34b) extending from the spherical rim face section (33) towards a radial end (36) of the rim (31) in the radial direction onto a region of the spherical rim face section (33), which region faces away from the first widening rim face section (34a).

6. Roller bearing according to one of the preceding claims, the widening rim face section (34) being formed by way of a planar rim face section which tangentially adjoins the spherical rim face section (33).

7. Roller bearing according to one of Claims 1 to 5, the widening rim face section (34) being formed by way of a further spherical rim face section which adjoins the spherical rim face section (33) and has a smaller curvature than the second curvature of the spherical rim face section (33).

8. Roller bearing according to one of the preceding claims, the roller bearing being a tapered roller bearing and the roller (13) being configured as a tapered roller.

9. Roller bearing according to one of the preceding claims, the bearing ring (30) being a bearing inner ring.

10. Method (60) for producing a bearing ring (30) for a roller bearing having a raceway (14; 15) for at least one roller (13), the roller having a roller end face (21) of spheroid configuration with a first curvature, having a step (61) for providing a rim (31) which is arranged on the end side with respect to the roller (13) in order to dissipate axial forces with a rim face (32) which faces the roller end face (21), the step (61) for providing the rim (31) having the following steps:
provision (611) of a spherical face section (33) of the rim face with a second curvature, the second curvature being selected with respect to the first curvature so as to obtain a first gap dimension (d₁) between the roller end face (21) of spheroid configuration and the spherical rim face section (33);
**characterized by**
production (612) of a widening face section (34) of the rim face with a smaller curvature than the second curvature for an enlarged gap dimension (d₂) in comparison with the first gap dimension (d₁) between the roller end face (21) and the widening rim face section (34).

## Revendications

1. Palier à rouleaux comprenant une bague de palier (30) avec un chemin de roulement (14 ; 15) pour au moins un rouleau (13) du palier à rouleaux, qui présente une surface frontale de rouleau (21) réalisée sous forme au moins en partie sphérique avec une première courbure, la bague de palier comprenant :
un bord (31) disposé en position frontale par rapport au rouleau (13) pour évacuer des forces axiales, avec une surface de bord (32) tournée vers la surface frontale du rouleau, qui présente une portion de surface de bord sphérique (33) avec une deuxième courbure,
la première et la deuxième courbure étant choisies de manière à obtenir entre la surface frontale de rouleau réalisée sous forme sphérique (21) et la portion de surface de bord sphérique (33) une première dimension de fente (d₁),
**caractérisé en ce que** la surface de bord (32) présente en outre une portion de surface de bord s'ouvrant (34) avec une courbure plus faible que la deuxième courbure pour une dimension de fente plus importante (d₂) que la première dimension de fente (d₁) entre la surface frontale de rouleau (21) et la portion de surface de bord s'ouvrant (34).

2. Palier à rouleaux selon la revendication 1, dans lequel un angle (α) entre un premier plan tangentiel (38) au niveau d'une portion de surface de bord (40) sphérique prolongée de manière imaginaire dans la portion de surface de bord s'ouvrant (34) et un deuxième plan tangentiel (39) au niveau de la portion de surface de bord s'ouvrant (34) est situé dans une plage supérieure à 0° et 30°.

3. Palier à rouleaux selon l'une quelconque des revendications précédentes, dans lequel la portion de surface de bord sphérique (33) s'étend sur une portion de surface de bord correspondant au moins à un tiers de la hauteur de bord (h) du bord (31).

4. Palier à rouleaux selon l'une quelconque des revendications précédentes, dans lequel la portion de surface de bord sphérique (33) s'étend depuis une région de coin (35) entre le chemin de roulement (14) et la surface de bord (32).

5. Palier à rouleaux selon l'une quelconque des revendications 1 à 3, dans lequel une première portion de surface de bord s'ouvrant (34a) s'étend depuis une région de coin (35) entre le chemin de roulement (14) et la surface de bord (32), la portion de surface de bord sphérique (33) se raccordant dans la direction radiale à la première portion de surface de bord s'ouvrant (34a) et une deuxième portion de surface de bord s'ouvrant (34b) s'étendant au niveau d'une région de la portion de surface de bord sphérique (33) opposée à la première portion de surface de bord s'ouvrant (34a) dans la direction radiale depuis la portion de surface de bord sphérique (33) vers une extrémité radiale (36) du bord (31).

6. Palier à rouleaux selon l'une quelconque des revendications précédentes, dans lequel la portion de surface de bord s'ouvrant (34) est formée par une portion de surface de bord plane se raccordant tangentiellement à la portion de surface de bord sphérique (33).

7. Palier à rouleaux selon l'une quelconque des revendications 1 à 5, dans laquelle la portion de surface de bord s'ouvrant (34) est formée par une portion de surface de bord sphérique supplémentaire se raccordant à la portion de surface de bord sphérique (33), qui présente une courbure inférieure à la deuxième courbure de la portion de surface de bord sphérique (33).

8. Palier à rouleaux selon l'une quelconque des revendications précédentes, dans lequel le palier à rouleaux est un palier à rouleaux coniques et le rouleau (13) est réalisé sous forme de rouleau conique.

9. Palier à rouleaux selon l'une quelconque des revendications précédentes, dans laquelle la bague de palier (30) est une bague de palier interne.

10. Procédé (60) pour fabriquer une bague de palier (30) pour un palier à rouleaux comprenant un chemin de roulement (14 ; 15) pour au moins un rouleau (13), le rouleau présentant une surface frontale de rouleau (21) réalisé sous forme sphérique avec une première courbure, comprenant une étape (61) consistant à fournir un bord (31) disposé en position frontale par rapport au rouleau (13) pour évacuer des forces axiales avec une surface de bord (32) tournée vers la surface frontale de rouleau (21), l'étape (61) consistant à fournir le bord (31) présentant les étapes suivantes :
fournir (611) une portion de surface sphérique (33) de la surface de bord avec une deuxième courbure, la deuxième courbure étant choisie par rapport à la première courbure de manière à obtenir entre la surface frontale de rouleau réalisée sous forme sphérique (21) et la portion de surface de bord sphérique (33) une première dimension de fente (d₁) ;
**caractérisé par**
la production (612) d'une portion de surface s'ouvrant (34) de la surface de bord avec une courbure plus faible que la deuxième courbure pour une dimension de fente plus importante (d₂) que la première dimension de fente (d₁) entre la surface frontale de rouleau (21) et la portion de surface de bord s'ouvrant (34).
